(19) Europäisches Patentamt

European Patent Office

Office européen des brevets

(11) **EP 0 536 325 B2**

(12) **NEW EUROPEAN PATENT SPECIFICATION**

(45) Date of publication and mention
of the opposition decision:
**23.08.2006 Bulletin 2006/34**

(45) Mention of the grant of the patent:
**15.09.1999 Bulletin 1999/37**

(21) Application number: **91913954.3**

(22) Date of filing: **18.07.1991**

(51) Int Cl.:
***C10G 73/38*** *(2006.01)*    ***C10G 73/42*** *(2006.01)*
***C07C 5/22*** *(2006.01)*

(86) International application number:
**PCT/US1991/005073**

(87) International publication number:
**WO 1992/001769 (06.02.1992 Gazette 1992/04)**

(54) **WAX ISOMERIZATION USING CATALYST OF SPECIFIC PORE GEOMETRY**

WACHSISOMERISIERUNG UNTER VERWENDUNG VON KATALYSATOREN MIT SPEZIELLER PORENGEOMETRIE

ISOMERISATION DE PARAFFINE UTILISANT UN CATALYSEUR AYANT UNE GEOMETRIE A PORES SPECIFIQUES

(84) Designated Contracting States:
**AT BE CH DE DK ES FR GB GR IT LI LU NL SE**

(30) Priority: **20.07.1990 US 556946**

(43) Date of publication of application:
**14.04.1993 Bulletin 1993/15**

(73) Proprietor: **Chevron U.S.A. Inc.**
**San Ramon, CA 94583-2324 (US)**

(72) Inventor: **MILLER, Stephen, J.**
**San Francisco, CA 94121 (US)**

(74) Representative: **Nash, David Allan et al**
**HASELTINE LAKE,**
**Redcliff Quay**
**120 Redcliff Street**
**Bristol BS1 6HU (GB)**

(56) References cited:
| | |
|---|---|
| EP-A- 0 092 376 | EP-A- 0 185 448 |
| EP-A- 0 209 997 | EP-A- 0 225 053 |
| EP-A- 0 324 528 | EP-A- 0 458 895 |
| EP-B- 0 540 590 | WO-A-90/09363 |
| WO-A-90/09363 | US-A- 4 574 043 |
| US-A- 4 689 138 | US-A- 4 710 485 |
| US-A- 4 808 296 | US-A- 4 814 543 |
| US-A- 4 906 351 | US-A- 4 908 120 |
| US-A- 4 919 788 | US-A- 4 956 521 |
| US-A- 4 975 177 | US-A- 4 992 159 |
| US-A- 5 135 638 | US-A- 5 271 825 |

- **Encyclopaedia of Chemical Technology 3rd edition, vol.11 (1980 ) pg 473 - 8**
- **Atlas of Zeolite Structure Types , W.M. Meir, D.H. Olsen, 2nd revised ed., Butterworths, (1987), pgs 14,15,64,65,106,107**
- **Zeolite, vol.5 ( 1985 )n article by A.C. rohrman et. al, pg 352**
- **Zeolites: Science and Technology ed. F.r. Ribeiro, A,E. Rodrigues, L.D. Rollman, C. Naccache, pub.: Mertinus Nijhoff Publ. (1984), article by R.M. Barrer pg 35,75,76**
- **Catal.Rev.-Sci.Eng., vol.28,(2&3), pgs 185-9, Chen N.Y. & Garwood, W.E.**
- **Atlas of Zeolite Structure Types, W.M. Meier, D.H. Olson & Ch. Baerlocher, 4th revised ed. (1996), 2 Pages**
- **Zeolites, vol.5, (1985), article by Rohrman et al. , 2 pages**
- **Stud.Surf.Sci.Catal., Wu et al.,vol.28 ,1986, pgs. 547 -553**
- **Proc.Int.congr.catal.Calgary, vol.1, 1988, pgs 120-7, S.Sivisanker et al.**
- **A diagram of the pore ZSM-23, 1 page**
- **API Proceedings, vol.26, (III), 1946, pgs 254, 268**
- **ASTM International Designation D2270-93 (reapproved 1998) pgs 1-6**
- **Us application No. 311969 filed 17/2/1989**

Remarks:
The file contains technical information submitted after the application was filed and not included in this specification

**Description**

Field Of The invention

The present invention relates to a process for isomerizing a waxy food, including petroleum waxes, over a catalyst having a particular pore geometry and including at least one Group VIII metal to produce a lube oil having a low pour point and excellent viscosity and viscosity index properties.

Background Of The Invention

High-quatity lubricating oils are critical for the operation of modem machinery and automobiles. Unfortunately the supply of natural crude oils having good lubricating properties is not adequate for present demands. Due to uncertainties in world crude oil supplies, high-quality lubricating oils must be produced from ordinary crude feedstocks and can even be produced from paraffinic synthetic polymers. Numerous processes have been proposed for producing lubricating oils that can be converted into other products by upgrading the ordinary and low-quality stocks.

It is desirable to upgrade a crude fraction otherwise unsuitable for lubricant manufacture into one from which good yields of lube oils can be obtained. Dewaxing is required when highly paraffinic oils are to be used in products which need to remain mobile at low temperatures, e.g., lubricating oils, heating oils and jet fuels. The higher molecular weight straight chain normal and slightly branched paraffins which are present in oils of this kind are waxes which cause high pour points and high cloud points in the oils. If adequately low pour points are to be obtained, these waxes must be wholly or partly removed. In the past, various solvent removal techniques were used such as propane dewaxing and MEK dewaxing but these techniques are costly and time consuming. Catalytic dewaxing processes are more economical and achieve this end by selectively cracking the longer chain n-paraffine to produce lower molecular weight products, some of which may be removed by distillation.

Because of their selectivity, prior art dewaxing catalysts generally comprise an aluminosilicate zeolite having a pore size which admits the straight chain n-paraffins either alone or with only slightly branched chain paraffins (sometimes referred to herein as waxes), but which excludes more highly branched materials, cycloaliphatics and aromatics. Zeolites such as ZSM-5, ZSM-11, ZSM-12, ZSM-23, ZSM-35 and ZSM-38 have been proposed for this purpose in dewaxing processes and are described in U.S. Patents Nos. 3,894,938; 4176,050; 4,181,598; 4,222,855; 4,229,282. 4710485 and 4,247,388, and EP-A-0209997. Such processes as are set forth in the above-mentioned patents are used to accomplish dewaxing on feeds which contain relatively low amounts of waxes, generally wall below 50%, and they operate by selectively cracking the waxes. These processes are not readily adapted for treating high wax content feeds since, due to the large amount of cracking which occurs, such waxes would tend to be cracked to provide very low molecular weight products.

Since dewaxing processes of this kind function by means of cracking reactions, a number of useful products become degraded to lower molecular weight materials. For example, waxy paraffins may be cracked to butane, propane, ethane and methane as may the lighter n-paraffine which do not contribute to the waxy nature of the oil. Because these lighter products are generally of lower value than the higher molecular weight materials, it would obviously be desirable to limit the degree of cracking which takes place during a catalytic dewaxing process.

Although U.S. Patents Nos. 3,700,585; 3,894,938; 4,176,050; 4,181,598; 4,222,855; 4,222,282; 4,247,388 and 4,860,311 teach dewaxing of waxy feeds, the processes disclosed therein do not disclose a process for producing high yields of a lube oil having a very low pour point and high viscosity index from feeds containing a very high wax content, i.e., greater than 80% wax, such as stack wax, deolled wax or synthetic liquid polymers such as low molecular weight polyethylene.

Also, the prior art does not disclose a tube oil characterized by having both a low pour point (below about -24°C) and a viscosity index greater than 125. It is believed that the closest that the prior art comes to accomplishing this is set forth in one or more of U.S. Patents 3,385,390 (pour point -23°C, viscosity index 124); 3,658,689 (pour point -54°C, viscosity index 92 as calculated from Table III of the patent): 3,764,516 (same as 3,658,689); 3,487,005 (pour point -29°C, viscosity index 121 and 125 and pour point -46°C, viscosity index 122) and 4,547,283 pour point not specified but probably above 0°C as made by solvent dewaxing, viscosity index 154-156).

Since processes which remove wax will give a low yield with very waxy feeds, isomerization processes are preferred. U.S. Patent No. 4,734,539 discloses a method for isomerizing a naphtha feed using an intermediate pore size zeolite catalyst, such as an H-offretite catalyst. U.S. Patent No. 4,518,485 discloses a process for dewaxing a hydrocarbon feedstock containing paraffins by a hydrotreating and isomerization process.

U.S. Patent No. 4,689,138 discloses an isomerization process for reducing the normal paraffin content of a hydrocarbon oil feedstock using a catalyst comprising an intermediate pore size silicoaluminophosphate molecular sieve containing a Group VIII metal component which is occluded in the crystals during growth.

Lube oils may also be prepared from feeds having a high wax content such as slack wax by an isomerization process. In prior art wax isomerization processes, however, either the yield is low and thus the process is uneconomical, or the feed is not completely dewaxed. When the feed is not completely dewaxed it must be recycled to a dewaxing process, e.g., a solvent dewaxer, which limits the throughput and increases cost. U.S. Patent No. 4,547,283 discloses converting wax to tube. However, the MEK dewaxing following isomerization disclosed therein severely limits pour reduction and thus, very low pour points cannot be achieved. Further, the catalyst disclosed therein is much less selective than the catalysts used in the present invention.

Summary Of The Invention

The present invention overcomes the problems and disadvantages of the prior art by providing a process for preparing a tube oil comprising isomerizing a waxy feed having greater than 80% wax over a catalyst comprising an inorganic oxide molecular sieve having generally oval 1-D pores having a minor axis between 4,2Å and 4.8Å and a major axis between 5.4Å and 7.0Å as determined by X-ray crystallography and at least one Group VIII metal selected from Pt and Pd or mixtures thereof at a pressure of from 205 kPa (15 psig) to 13900 kPa (2000 psig).

It is an object of the invention to produce a tube oil having excellent viscosity and viscosity index properties and a very low pour point.

It is a further object of the invention to produce a tube oil having low frictional resistance.

It is an additional object of the invention to produce a lube oil which causes less engine wear than prior art mineral oils.

It is an additional object of the invention to produce a lube oil which provides increased fuel efficiency.

It is yet a further object of the invention to produce a lube oil having improve oxidation resistance compared to conventional mineral oils. The term "oxidation resistance" refers to the resistance of the oil to oxygen addition, i.e., how rapidly oxygen is picked up and added to molecular species within the oil. Oxidation resistance is indicated by the oxidator BN measured in hours. Oxidator BN measures the time required for 100 grams of oil to absorb one liter of oxygen and is described in U.S. Patent No. 3,852,207 at column 6, lines 15-30 which is incorporated herein by reference.

Additional objects and advantages of the invention will be set forth in part in the description which follows, and in part will be obvious from the description, or may be learned by practice of the invention. The objects and advantages of the invention will be realized and attained by means of the instrumentalities and combinations, particularly pointed out in the appended claims.

In accordance with another embodiment of the invention the catalyst in the process comprises an intermediate pore size ZSM-22, or ZSM-35 zeolite.

The lube oil produced by the process of the invention as a high paraffinic content which provides a low viscosity for its boiling range. Such properties result in less frictional resistance, less engine wear and increased fuel efficiency. The low viscosity and low pour point of the tube oil result in easier cold engine starting than prior art mineral oils. The tube oil has a high viscosity index ranging from 125 to 180 and a very low pour point, ranging from less than -63°C to-24°C. Since little or no viscosity index improver compositions or pour point depressant compositions are necessary for use with the tube oil of the invention, fewer performance-decreasing deposits are formed. The high paraffinic nature of the oil gives it improved oxidation resistance compared to conventional mineral oils.

Detailed Description Of The Preferred Embodiments

Reference will now be made in detail to the present preferred embodiments of the invention.

As used herein, the term "waxy feed" includes petroleum waxes. The feedstock employed in the process of the invention preferably contains greater than 50% wax, more preferably greater than 80% wax, most preferably greater than 90% wax. However, a highly paraffinic feed having a high pour point, generally above 0°C, more usually above 10°C, but containing less than 50% wax is also suitable for use in the process of the invention. Such a feed should preferably contain greater than 70% paraffinic carbon, more preferably greater than 80% paraffinic carbon, most preferably greater than about 90% paraffinic carbon.

Exemplary additional suitable feeds for use in the process of the invention include waxy distillate stocks such as gas oils, lubricating oil stocks, synthetic oils such as those by

Fischer-Tropsch synthesis, high pour point polyalphaolefins, foots oils, synthetic waxes such as normal alphaolefin waxes, slack waxes, deoiled waxes and microcrystalline waxes. Foots oil is prepared by separating oil from the wax. The isolated oil is referred to as foots oil.

Foods also suitable for use in the process of the invention are partially dewaxed oils wherein dewaxing to an intermediate pour point has been carried out by a process other than that claimed herein, for example, conventional catalytic dewaxing processes and solvent dewaxing processes. Exemplary suitable solvent dewaxing processes are set forth in U.S. Patent No. 4,547,287.

The process of the invention may also be employed in combination with conventional dewaxing processes to achieve a lube oil having particular desired properties. For example, the process of the invention can be used to reduce the pour point of a lube oil to a desired degree. Further reduction of the pour point can then be achieved using a conventional dewaxing process. Under such circumstances, immediately following the isomerization process of the invention, the tube oil may have a pour point greater than about 15°F (-9°C). Further, the pour point of the tube oil produced by the process of the invention can be reduced by adding pour point depressant compositions thereto.

The feedstock will normally be a $C_{20}$+feedstock generally boiling above about 600°F (316°C). However, the process of the invention is particularly useful with waxy distillate stocks such as gas oils, lubricating oil stocks, heating oils and other distillate fractions whose pour point and viscosity need to be maintained within certain specification limits. Lubricating oil stocks will generally boil above 230°C (450°F), more usually above 315°C (600°F). Hydroprocessed stocks are a convenient source of stocks of this kind and also of other distillate fractions since they normally contain significant amounts of waxy n-paraffins. The feedstock of the present process will normally be a $C_{20}$+ feedstock containing paraffins, olefins, naphthenes, aromatics and heterocyclic compounds and a substantial proportion of higher molecular weight n-paraffins and slightly branched paraffins which contribute to the waxy nature of the feedstock. During processing, the n-paraffins and the slightly branched paraffins undergo some cracking or hydrocracking to form liquid range materials which contribute to a low viscosity product. The degree of cracking which occurs is, however, limited so that the yield of low boiling products is reduced, thereby preserving the economic value of the feedstock.

Slack wax can be obtained from either a hydrocracked tube oil or a solvent refined lube oil. Hydrocracking is preferred because that process can also reduce the nitrogen content to lowvalues. With slack wax derived from solvent refined oils, deoiling can be used to reduce the nitrogen content. Optionally, hydrotreating of the slack wax can be carried out to lower the nitrogen content thereof. Slack waxes possess a very high viscosity index, normally in the range of from 140 to 200, depending on the oil content and the starting material from which the wax has been prepared. Slack waxes are therefore eminontly suitable for the preparation of lubricating oils having very high viscosity indices, i.e., from about 120 to about 130.

The present invention produces a unique tube oil product as characterized by its combination of low pour point and high viscosity index. The tube oil is characterized by a pour point below -24°C (generally between -24°C and - 63°C) and a viscosity index between 125 and 180, suitably greater than about 130. Preferably the pour point is below -30°C, more preferably below 40°C, and the viscosity index is greater than about 140.

While the process of the invention can be practiced with utility when the feed contains organic (nitrogen containing impurities), it is preferred that the organic nitrogen content of the feed be less than about 50 ppmw (parts per million by weight), more preferably less than about 10 ppmw Particularly good results, in terms of activity and length of catalyst cycle (period between successive regenerations or start-up and first regeneration) are experienced when the feed contains less than about 10 ppmw ot organic nitrogen.

The phrase "intermediate pore size", as used herein means an effective pore aperture in the range of from about 5.3 to about 6.5 Å when the porous inorganic oxide is in the calcined form. Molecular sieves having pore apertures in this range tend to have unique molecular sieving characteristics. Unlike small pore zeolites such as erlonite and chabazite, they will allow hydrocarbons having some branching into the molecular sieve void spaces. Unlike larger pore zeolites such as the faujasites and mordenites, they can differentiate between n-alkanes and slightly branched alkanes, and larger branched alkanes having, for example, quaternary carbon atoms.

The effective pore size of the molecular sleves can be measured using standard adsorption techniques and hydrocarbonaceous compounds of known minimum kinetic: diameters, See Breck, Zeolite Molecular Sieves. 1974 (especially Chapter 8); Anderson, et al., J. Catalysis 58, 114 (1978); and U.S. Patent No. 4,440,871, the pennant portions of which are incorporated herein by reference.

In performing adsorption meaaurements to determine pore size, standard techniques are used. It is convenient to consider a particular molecule as excluded if it does not reach at least 95% of its equilibrium adsorption value on the molecular sieve in lese than about 10 minutes (p/po = 0.5; 25°C).

Intermediate pore size molecular sleves will typically admit molecules having kinetic diameters of 5.3 to 6.5 Å with little hindrance. Examples of such compounds (and their kinetic diameters in Å) are: n-hexane (4.3), 3-methylpentane (5.5), benzene (5.85), and toluene (5.8). Compounds having kinetic diameter of about 6 to 8.5 Å can be admitted into the pores, depending on the particular sieve, but do not penetrate as quickly and in some cases are effectively excluded. Compounds having kinetic diameters. In the range of 6 to 6.5 Å include: cyclohaxane (6.0), 2,3-dimethybutane (6.1), and m-xylene (6.1). Generally, compounds having kinetic diameters of greater than about 6.5 Å do not penetrate the pore apertures and thus are not absorbed into the interior of the molecular sieve lattice. Examples of such larger compounds include: o-xylene (6.B), 1,3,5-trimethylbenzene (7.5), and tributylamine (8.1).

The preferred effective pore size range is from about 5.5 to about 6.2 Å.

While the effective pore size as dicussed above is important to the practice of the invention not all intermediate pore size molecular sleves having such effective pore sizes are advantageously usable in the practice of the present invention. Indeed, it is essential that the intermediate pore size molecular sieve catalysts used in the practice of the present invention have a very specific pore shape and size as measured by X-ray crystallography. First, the intracrystalline channels must be parallel and must not be interconnected. Such channels are conventionally referred to as 1-D diffusion types or more shortly as 1-D pores. The classification of intrazeolite channels as 1-D. 2-D and 3-D is set forth by R. M. Barrer in Zeolites, Science and Technology, edited by F. R. Rodrigues, L D. Rollman and C. Naccache, NATO ASI Series, 1984 which classification is incorporated in its entirety by reference (see particularly page 75). Known 1- D zeolites include cancrinite hydrate, laumontite, mazzite, mordanite and zeolite L.

None of the above listed 1-D pore zeolites, however, satisfies the second essential criterion for catalysts useful in the practice of the present invention. This second essential criterion is that the pores must be generally oval in shape, by which is meant the pores must exhibit two unequal axes referred to herein as a minor axis and a major axis. The term oval as used herein is not meant to require a specific oval or elliptical shape but rather to refer to the pores exhibiting two unequal axes. In particular, the 1-D pores of the catalysts useful in the practice of the present invention must have a minor axis between about 4.2 Å and about 4.8 Å and a major axis between about 5.4 Å and about 7.0 Å as determined by conventional X-ray crystallography measurements.

The catalyst used in the isomerization process of the invention has an acidic component and a platinum and/ or palladium hydrogenation component.

The group of intermediate pore size zeolites of the present invention include ZSM-22 and ZSM-35. These catalysts are generally considered to be intermediate pore size catalysts based on the measure of their internal structure as represented by their Constraint index. Zeolites which provide highly restricted access to and egress from their internal structure have a high value for the Constraint Index, while zeolites which provide relatively free access to the Internal zeolite structure have a low value for their Constraint Index. The method for determining Constraint Index is described fully in U.S. Patent No. 4,016,218 which is incorporated herein by reference.

Those zeolites exhibiting a Constraint Index value within the range of from about 1 to about 12 are considered to be intermediate pore size zeolites. Zeolites which are considered to be in this range include ZSM-5, ZSM-11. etc. Upon careful examination of the intermediate pore size zeolites, however, it has been found that not all of them are efficient as a catalyst for isomerization of a paraffin-containing feedstock which are high in $C_{20}+$paraffins, and preferably which are high in $C_{22}+$ paraffins. In particular, it has been found that the group including ZSM-22 and ZSM-35 used in combination with Group VIII metals can provide a means whereby a hydrocarbon feedstock having a paraffinic content with molecules of 20 carbon atoms or more undergoes unexpectedly efficient isomerization without destroying the ultimate yield of the feedstock.

It is known to use prior art techniques for formation of a great variety of synthetic aluminosilicates. These aluminosilicates have come to be designated by letter or other convenient symbols. One of the zeolites of the present invention, ZSM-22, is a highly siliceous material which includes crystalline three-dimensional continuous framework silicon containing structures or crystals which result when all the oxygen atoms in the tetrahedra are mutually shared between tetrahedral atoms of silicon or aluminum, and which can exist with a network of mostly $SiO_2$, i.e., exclusive of any intracrystalline cations. The description of ZSM-22 is set forth in full in U.S. Patent No. 4,556,477, U.S. Patent No. 4,481,177 and European Patent Application No. 102,716 the contents of which are incorporated herein by reference.

As indicated in U.S. Patent No. 4,566,477 the crystalline material ZSM-22 has been designated with a characteristic X-ray diffraction pattern as set forth in Table I.

TABLE I

| Most Significant Lines of ZSM-22 | |
|---|---|
| Interplanar d-spacings (Å) | Relative Intensity (I/Io) |
| 10.9±0.2 | M-VS |
| 8.7±0.16 | W |
| 6.94±0.10 | W-M |
| 5.40 ± 0.08 | W |
| 4.58 ± 0.07 | W |
| 4.36±0.07 | VS |
| 3.68±0.05 | VS |
| 3.62±0.05 | S-VS |
| 3.47±0.04 | M-S |
| 3.30±0.04 | W |
| 2.74± 0.02 | W |
| 2.52±0.02 | W |

It should be understood that the X-ray diffraction pattern of Table VII is characteristic of all the species of ZSM-22 zeolite compositions. Ion exchange of the alkali metal cations with other ions results in a zeolite which reveals substantially the same X-ray diffraction pattern with some minor shifts in interplanar spacing and variation in rotative intensity.

Furthermore, the original cations of the as-eynthesized ZSM-22 can be replaced at least in part by other ions using conventional ion exchange techniques. It may be necessary to precatctne the ZSM-22 zeolite crystals prior to ion exchange, in accordance with the present invention, the replacement ions are those taken from Group VIII of the Periodic Table, especially platinum, palladium, iridium, osmium, rhodium and ruthenium.

ZSM-22 freely sorbs normal hexane and has a pore dimension greater than about 4 Å. In addition, the structure of the zeolite provides constrained access to larger molecules. The Constraint index as determined by the procedure set forth in U.S. Patent No. 4,016,246 for ZSM-22 has been determined to be from about 2.5 to about 3.0.

Other molecular sieves which can be used with the present invention include, for example, Theta-1, as described In U.S. Patents 4.533,649 and 4,836,910, both of which are incorporated in their entireties by reference, Nu-10, as described in European Patent Application 065,400 which is incorporated in its entirety by reference and SSZ-20 as described in U.S. Patent 4,483,836 which is incorporated in its entirety by reference.

Another intermediate pore size zeolite which has been found to be successful in the present invention is ZSM-35, which is disclosed in U.S. Patent No. 4,016,245, the contents of which are incorporated herein by reference. The synthetic crystalline aluminosilicate known as ZSM-35, has a characteristic X-ray diffraction pattern which is set forth in U.S. Patent No. 4,016,245. ZSM-35 has a composition which can be defined in terms of mole ratio of oxides in the anhydrous state as follows:

$(0.3\text{-}2.5)\ R_2O\colon (0\text{-}0.8)\ M_2O\colon Al_2O_3\colon >8\ SiO_2$

wherein R is organic nitrogen-containing cation derived from ethylenediamine or pyrrolidine and M is an alkali metal cation. The original cations of the as-synthesized ZSM-35 can be removed using techniques well known in the art which includes ion exchange with other cations. In the present invention the cation exchange is used to replace the as-synthesized cations with the Group VIII metals set forth herein. It has been observed that the X-ray diffraction pattern os ZSM-35 is similar to that of natural ferrierite with a notable exception being that natural ferrierite patterns exhibit a significant line at 1.33 Å.

X-ray crystallography of ZSM-22 and ZSM-35 shows these molecular sieves to have the following major and minor axes : ZSM-22, major 5.5 Å. minor 4.6 Å (Kokotaib. G. T., et al, Zeoitea, 5. 349(85)); ZSM-35, major 5.4 Å, minor 4.2 Å (Meler, W. M. and Olsen. D. H., Atlas of Zeolite Structure Types, Butterworths, 1987).

The intermediate pore size molecular sieve is used in admixture with at least one Group Vill metal. Preferably the Group VIII metal is selected from the group consisting of at least one of platinum and palladium and optionally other catalytically active metals such as molybdenum, nickel, vanadium, cobalt, tungsten, zinc and mixtures thereof. Most preferably, the Group VIII metalla selected from the group consisting of at least one of platinum and palladium. The amount of metal ranges from about 0.01% to about 10% by weight of the molecular sieve, preferably from about 0.2% to about 5% by weight of the molecular sieve. The techniques of introducing catalytically active metals into a molecular sieve are disclosed in the literature, and preexisting metal incorporation techniques and treatment of the molecular sieve to form an active catalyst such as ion exchange, impregnation or occlusion during sieve preparation are suitable for use in the present process. Such techniques are disclosed in U.S. Patent Nos. 3,236,761; 3,226,339; 3,236,762; 3,820,960; 3,373,109; 4,202,998; 4,440,781 and 4,710,485 which are incorporated herein by reference.

The term "metal" or "active metal" as used herein means one or more metals in the elemental state or in some form such as sulfide, oxide and mixtures thereof. Regardless of the state in which the metallic component actually exists, the concentrations are computed as if they existed h the elemental state.

The catalyst may also contain metals which reduce the number of strong acid sites on the catalyst and thereby lower the selectivity for cracking versus isomerization. Especially preferred are the Group IIA metals such as magnesium and calcium.

It is preferred that relatively small crystal size catalyst be utilized in practicing the invention. Suitably, the average crystal size is no greater than about 10μ, preferably no more than about 5μ, more preferably no more than about 1μ and still more preferably no more than about 0.5μ.

Strong acidity may also be reduced by introducing nitrogen compounds, e.g., $NH_3$ or organic nitrogen compounds, into the feed; however, the total nitrogen content should be less than 50 ppm, preferably less than 10 ppm. The physical form of the catalyst depends on the type of catalytic reactor being employed and may be in the form of a granule or powder, and is desirably compacted into a more readily usable form (e.g., larger agglomerates), usually with a silica or alumina binder for fluidized bed reaction, or pills, prilis, spheres, extrudates, or other shapes of controlled size to accord adequate catalyst-reactant contact. The catalyst may be employed either as a fluidized catalyst, or in a fixed or moving bed, and in one or more reaction stages.

The catalytic isomerization step of the invention may be conducted by contacting the feed with a fixed stationary bed of catalyst with a fixed fluidized bed, or with a transport bed. A simple and therefore preferred configuration is a trickle-bed operation in which the feed is allowed to trickle through a stationary fixed bed, preferably in the presence of hydrogen.

The catalytic isomerization conditions employed depend on the feed used and the desired pour point. Generally, the temperature is from 200°C to 475°C, preferably from 250°C and to 450°C. The pressure is typically from 15 psig and to 2000 psig, preferably from 50 to 1000 psig, more preferably from 100 pelg to 600 psig. The process of the invention is preferably carried out at low pressure. The liquid hourly space velocity (LHSV) is preferably from 0.1 to 20, more preferably from 0.1 to 5, and most preferably from 0.1 to 1.0. Low pressure and low liquid hourly space velocity provide enhanced isomerization selectivity which results in more isomerization and less cracking of the feed thus producing an increased yield.

Hydrogen is preferably present in the reaction zone during the catalytic isomerization process. The hydrogen to feed ratio is typically from about 500 to about 30,000 SCF/bbl (standard cubic feet per barrel), preferably from about 1,000 to about 10,000 SCF/bbl. Generally, hydrogen will be separated from the product and recycled to the reaction zone.

The intermediate pore size molecular sieve used in the isomenzation step provides selective conversion of the waxy components to non-waxy components. During processing, isomerization of the paraffins occurs to reduce the pour point of the oil below that of the feed and form tube oil boiling range materials which contribute to a low pour point product having excellent viscosity index properties.

Because of the selectivity of the intermediate pore size molecular sieve used in the invention, the yield of low boiling products is reduced, thereby preserving the economic value of the feedstock.

The intermediate pore size molecular sieve catalyst can be manufactured into a wide variety of physical forms. The molecular sieves can be in the form of a powder, a granule, or a molded product, such as an extrudate having a particle size suftiont to pass through a 2-mesh (Tyler) screen and be retained on a 40-mesh (Tyler) screen. In cases wherein the catalyst is molded, such as by extrusion with a binder, the sillcoaluminophosphate can be extruded before drying, or, dried or partially dried and then extruded.

The molecular sieve can be composited with other materials resistant to temperatures and other conditions employed in the isomerization process. Such matrix materials include active and inactive materials and synthetic or naturally occurring zeoiltes as well as inorganic material such as clays, silica and metal oxides. The latter may be either naturally occurring or in the form of gelatinous precipitates, sols or gels including mixtures of silica and metal oxides. Inactive materials suitably serve as diluents to control the amount of conversion in the isomerization process so that products can be obtained economically without employing other means for controlling the rate of reaction. The molecular sieve may be incorporated into naturally occurring clays, e.g., bentonite and kaolin. These materials, i.e., clays, oxides, etc., function, in part, as binders for the catalyst it is desirable to provide a catalyst having good crush strength because in petroleum refining, the catalyst is often subjected to rough handling. This tends to break the catalyst down into powder-like materials which cause problems in processing.

Naturally occurring clays which can be composited with the molecular sieve include the montmorillonite and kaolin families, which families include the sub-bentonites, and the kaoline commonly known as Dixie, McNamee, Georgia and Florida clays or others in which the main mineral constituent is halloysite, kaolinite, dickite, nacrite or anauxite. Fibrous clays such as halloyelte, sepiolite and attapulgite can also be use as supports. Such clays can be used in the raw state as originally mined or initially subjected to calcination, acid treatment or chemical modification.

In addition to the foregoing materials, the molecular sieve can be composited with porous matrix materials and mixtures of matrix materials such as silica, alumina, titania, magnesia, silica-alumina, silica-magnesia, silica-zirconia, silica-thoria, silica-baryllia, silica-litania, titania-zirconia as well as ternary compositions such as silica-alumina-thoria, silica-alumina-titania, silica-alumina-magnesia and silica-magnesia-zirconia. The matrix can be in the form of a cogel.

The catalyst used in the process of this invention can also be composited with other zeolites such as synthetic and natural faujasites, (e.g., X and Y) erionites, and mordenites. It can also be composited with purely synthetic zeolites such as those of the ZSM series. The combination of zeolites can also be composited in a porous inorganic matrix.

It is often desirable to use mild hydrogenation referred to as hydrofinishing after isomerization to produce more stable lubricating oils. Hydrofinishing is typically conducted at temperatures ranging from 190°C to 340°C, at pressures from 400 psig to 3000 psig, at space velocities (LHSV) from 0.1 to 20, and hydrogen recycle rates of from about 400 to about 1500 SCF/bbl. The hydrogenation catalyst employed must be active enough not only to hydrogenate the olefins, diolefine and color bodies within the lube oil fractions, but also to reduce the aromatic content. The hydrofinishing step is beneficial in preparing an acceptably stable lubricating oil.

Suitable hydrogenation catalysts include conventional metallic hydrogenation catalysts, particularly the Group VIII metals such as cobalt, nickel, palladium and platinum. The metals are typically associated with carriers such as bauxite, alumina, silica gal, silica-alumina composites, and crystalline aluminosilicate zeolites. Palladium is a particularly preferred hydrogenation metal. It desired, non-noble Group VIII metals can be used with molybdates. Metal oxides or sulfides can be used. Suitable catalysts are disclosed in U.S. Patent Nos. 3,852,207; 4,157,294; 3,904,513 and 4,673,487, which are incorporated herein by reference.

The high viscosity index lube oil produced by the process of the present invention can be used as a blending component to raise the viscosity index of tube oils to a higher value. Since yield decreases with increasing viscosity index in either hydrocracking or solvent refining, the use of an isomerized wax to increase the viscosity Index improves yield.

The invention will be further clarified by the following examples, which are intended to be purely exemplary of the invention.

The wax content of the oil set forth in the following Examples was determined as follows:

300 g of oil was diluted 50150 with a 4:1 mixture of methyl ethyl ketone and toluene which was cooled to -20°C in a refrigerator. The mixture was filtered through a Coors funnel at -15°C using Whatman No. 3 filter paper. The wax was removed from the filter and placed in a tared 2 liter flask. The solvent was removed on a hot plate and the wax weighed.

Example (Reference)

SAPO-11 was prepared as tollows

472.4 g of 85% $H_3PO_4$, were added to 1208 g of distilled $H_2O$ in a Teflon beaker in an ice bath. 816.8 g of aluminum isopropoxide ($Al[OC_3H_7]_3$) were slowly added with mixing and then mixed until homogenous. Then 120 g of fumed silica (Cabosil M-5) were added with mixing. Next, 182.4 g of di-n-propylamine ($Pr_2NH$) were added, followed by 9.0 g of 85% $H_3PO_4$, Final mixing was done using a Polytron. The mixture had a pH of 6.5 and the following composition. expressed in molar ratio of oxides:

$0.9Pr_2NH:SiO_2:Al_2O_3:1.04P_2O_6:36H_2O$

The mixture was placed in a Teflon bottle in a stainless steel pressure vessel and heated for 5 days at 200°C with no stirring and autogenous pressure. The suparnatant liquid was removed and the product was filtered, washed with water, dried overnight at 121°C, and calcined in air for 8 hours at 566°C. The average crystallite size was lose than 0.5 micron. The product was identified as SAPO-11 by X-ray diffraction analysis. Elemental analysis of the catched sieve showed it to have the following anhydrous molar composition:

$0.37SiO_2:Al_2O_3:P_2O_5$

The sieve was bound with 35% Catapal alumina and made into 1/10 inch extrudate. The extrudate was dried 3 hours at 121°C, calcined in air for 4 hours at 454°C, then impregnated with 0.5% Pt (as $Pt(NH_3)_4Cl_2.H_2O$) bythe pore-fill method. It was then dried for 2 hours at 93°C, 2 hours at 149°C. and calcined in air for B hours at 454°C. For the following examples, the catalyst was crushed and screened to 24-42 mesh.

Example 2

ZSM-22 was prepared as follows:

The following reactants were combined to produce a gel: N,N'-dimethyl imidazollum hydroxide, Ludox AS-30 silica sol, aluminum sulfate, sodium hydroxide, and water in the ratios:

$SiO_2/Al_2O_3 = 100$

$H_2O/SiO_2 = 30$

$template/SiO_2 = 0.15$

$NaOH/SiO_2 = 0.10$

$OH^-/SiO_2\ 0.25$

The reaction was run at autogenous pressure in a stainless steel autoclave at 150°C for 6 days. The product was filtered, calcinated to 1000° F in air, ion-exchanged four times with excess $NH_4NO_3$ and calcined acaln to 1000° F. The product was identified by X-ray diffraction analysis as ZSM-22. The $SiO_2/Al_2O_3$ mole ratio was about 100. The sieve was bound with 35% Catapal and the extrudate impregnated with 1% Pt and calcined in the same manner as the catalyst of Reference Example 1.

Example 3.

The catalyst of Example 2 was used to isomerize a slack wax derived from a 900°F+ hydrocracked vacuum gas oil (Table II) at 500 psig, 0.3 LHSV, and 8M SCF/bbi once-through $H_2$.

TABLE II

| Slack Wax From 900°F+ Hydrocracked VGO | |
|---|---|
| Gravity, API | 23.2 |
| Sulfur, ppm | 2.2 |
| Nitrogen, ppm | <1 |
| Pour Point, °C | +63 |
| Viscosity, cSt, 100°C | 8.30 |
| 70°C | 16.55 |
| Oil in Wax, Wt% | 14.5 |
| Simulated Distillation, LV%, °F | |
| ST/6 | 802/860 |
| 10/30 | 885/933 |
| 50 | 960 |
| 70/90 | 995/1038 |
| 95/99 | 1063/1118 |

The results are set forth in Table III. As used in Table III and herein, 700°F + yield is defined as :

$$\left\{1 - \frac{g700°F+(feed) - g700°F+(product)}{g700°F+(feed)}\right\} \times 100\%$$

Example 4

The catalyst of Example 2 was mixed with a 10-fold excess of 5 wt.% Mg $CO_3$ in water, filtered, dried for 1B hours at 93°C, and calcined for 12 hours at 538°C. The Mg content was 22.7 wt.%. This catalyst was used to isomerize the slack wax of Table XI at 0.3 LHSV and 8 MSCF/bbl $H_2$, both at 500 psig and 160 psig. The results are set forth in Table IV, showing a higher yield for this catalyst than

TABLE III

Isomerizing Slack Wax from 900°F+ Hydrocracked

VGO at 500 psig. 0.3 LHSV and 8 M SCF/bbl $H_2$ over Pt/ZSM-22

| Catalyst Temperature, °F | 700°F+ Yield, Wt.% | Pour/Cloud, °C | Viscosity at 40/100°C, cSt | VI |
|---|---|---|---|---|
| 600 | 53.4 | -3/+9 | 59.64/9.363 | 138 |
| 620 | 51.3 | -18/<-63 | 61.50/9.442 | 134 |
| 640 | 52.4 | -30/<-63 | 57.97/8.971 | 133 |

TABLE IV

Isomerizing Slack Wax from 900°F+ Hydrocracked

VGO at 0.3 LHSV and 8 M SCF/bbl $H_2$ over Pt-Mg/ZSM-22

| Pressure psig | Catalyst Temperature °F | 700°F+ Yield, Wt.% | Pour/Cloud, °C | Viscosity at 40/100°C. cSt | VI |
|---|---|---|---|---|---|
| 500 | 645 | 63.3 | -18/+2 | 55.09/8.990 | 143 |
| | 660 | 61.8 | -24/<-63 | 54.08/8.835 | 142 |
| 160 | 640 | 76.1 | -27/-4 | 45.55/8.003 | 149 |
| | 660 | 69.5 | -39/-8 | 46.10/7.886 | 142 |

that of Example 2 without Mg. The beneficial effect of low pressure on yield is also shown.

Example 5

The catalyst of Example 2 was used to isomerize a deoiled slack wax derived from a 900° F+ solvent refined vacuum gas oil (Table V). Conditions were the same as Example 7. The results are set forth in Table VI.

Example 6

The catalyst of Example 4 was used to isomerize a slack wax (not deoiled) derived from a 700-800°F solvent refined vacuum gas oil inspections of the feed are given in Table VII. Isomerization conditions were the same as in Example 3. The results are set forth in Table VIII.

TABLE V

| Deoiled Slack Wax from 900°F+ Solvent Refined VGO | |
|---|---|
| Gravity, "API | 36.7 |
| N, ppm | 12 |
| S, ppm | 326 |
| Viscosity, cSt, 100°C | 7.307 |
| 70°C | 14.03 |
| Simulated Distillation, LV%, °F | |
| ST/5 | 47/678 |
| 10/30 | 808/899 |
| 50 | 931 |
| 70/90 | 965/1011 |
| 95/99 | 1035/1090 |

TABLE VI

Isomerizing Deoiled Slack Wax from 900°F+ Solvent Refined
Oil at 0.3 LHSV. 500 psig. and 8 M SCF/bbl $H_2$ over Pt/ZSM-22

| Catalyst Temperature, °F | 700°F+ Yield, Wt.% | Pour/Cloud, °C | Viscosity at 40/100°C. cSt | VI |
|---|---|---|---|---|
| 665 | 54.9 | -10/-6 | 44.67/7.928 | 150 |
| 680 | 54.9 | -24/<-63 | 48.11/8.170 | 143 |
| 700 | 51.0 | -33/-4 | 41.30/7.442 | 148 |

TABLE VII

| Slack wax From 700-800°F+Solvent Refined VGO | |
|---|---|
| Gravity, "API | 40.0 |
| N, ppm | 20 |
| S, ppm | 300 |
| Viscosity, 100°C, cSt | 3.246 |
| 70°C | 5.482 |
| Pour Point, °C | +42 |
| Simulated Distillation, LV%. °F | |
| ST/5 | 575/870 |
| 10/30 | 685/723 |
| 50 | 759 |

(continued)

| Simulated Distillation, LV%. °F | |
|---|---|
| 70/90 | 794/842 |
| 95/99 | 861/902 |

TABLE VIII

Isomerizing Slack Wax from 700-800°F Solvent Refined

VGO at 0.3 LHSV, 500 psig, and 8 M SCF/bbl $H_2$ over Pt-Mg/ZSM-22

| Catalyst Temperature, °F | 700°F + Yield. Wt.% | Pour/Cloud, °C | Viscosity at 40/100°C. cSt | VI |
|---|---|---|---|---|
| 640 | 49.1 | -9/-6 | 14.55/3.893 | 174 |
| 700 | 45.1 | -24/<-63 | 14.66/3.594 | 130 |
| 720 | 42.8 | -33/<-63 | 14.78/3.893 | 169 |

Example 7.

The catalyst of Example 4 was used to isomerize a $C_{30}$+ normal alphaolefin wax (Table IX) at 0.3 LHSV and 8 MSCF/bbl $H_2$, both at 500 psig and 300 psig. The results are set forth in Table X.

TABLE IX

C30+ Normal Alphaolefin Wax

| | |
|---|---|
| Pour Point, °C | +72 |
| Viscosity, 100°C, cSt | 7.478 |
| Simulated Distillation, LV%, °F | |
| ST/5 | 802/807 |
| 10/30 | 809/644 |
| 50 | 893 |
| 70/90 | 931/1026 |
| 95/99 | 1087/1139 |

TABLE X

Isomerizing $C_{30}$+ Normal Alphaolefin Wax

at 0.3 LHSV. and 8 M SCF/bbl $H_2$ over Pt-Mg/ZSM-22

| Pressure psig | Catalyst Temperature °F | 700°F+ Yield. wt.% | Pour/Cloud, °C | Viscosity at 40/100°C. cSt | VI |
|---|---|---|---|---|---|
| 500 | 685 | 44.4 | -48/-10 | 51.88/9.383 | 166 |
| | 700 | 41.9 | -57/-26 | 54.42/9.467 | 158 |
| 300 | 640 | 52.8 | -36/-4 | 47.60/8.998 | 173 |
| | 660 | 47.9 | -51/<-63 | 50.87/9.192 | 165 |
| | 685 | 46.5 | <-63/<-63 | 51.67/9.063 | 157 |

While the invention has been described in connection with specific embodiments thereof, it will be understood that it le capable of further modification, and this application is intended to cover any variations, uses, or adaptations of the invention following, in general, the principles of the invention and including such departures from the present disclosure as coms within known or customary practice in the art to which the invention pertains and as may be applied to the essential features hereinbefore set forth, and as fall within the scope of the invention and the limits of the appended claims.

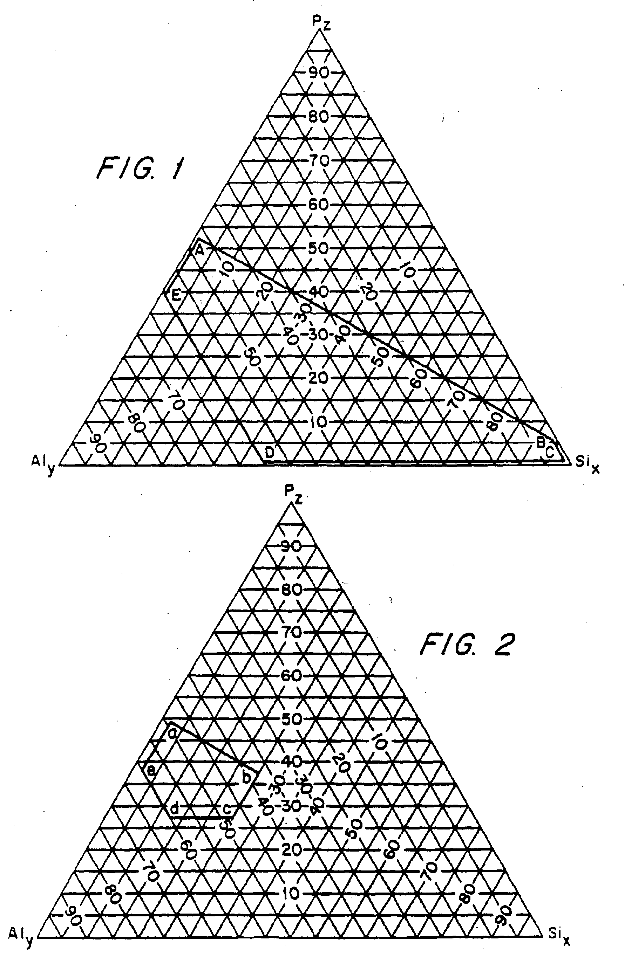

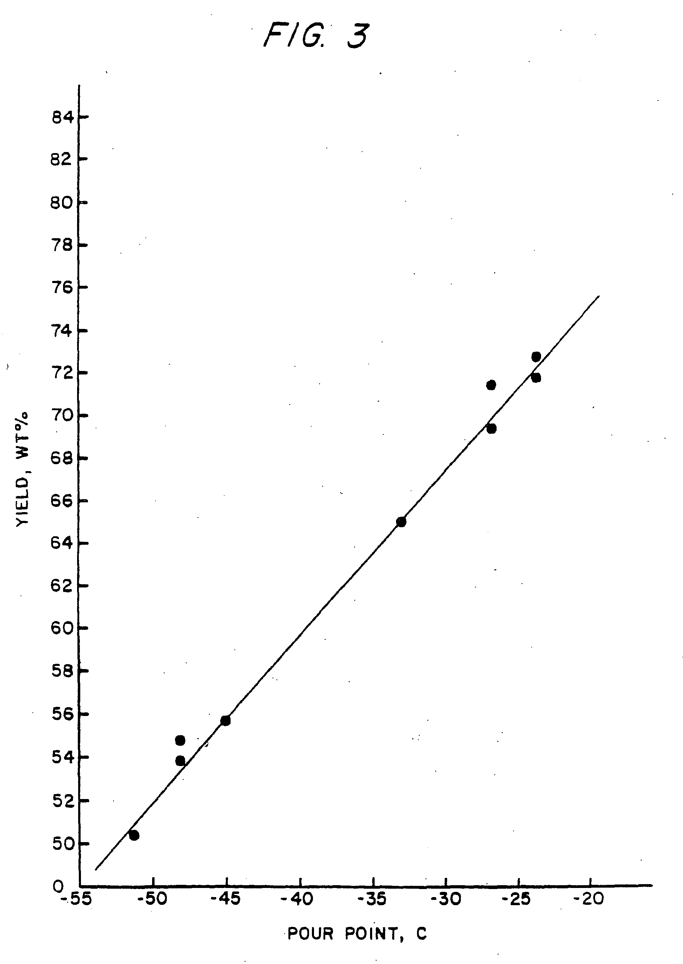

**Claims**

1.  A process for producing lube oil comprising isomerising a waxy feed having at least 80% wax over a catalyst comprising an intermediate pore size zeolite having generally oval 1-D pores having a minor axis between 4.2 Å and 4.8 Å and a major axis between 5.4 Å and 7.0 Å and at least.one Group VIII metal selected from platinum and palladium or mixtures thereof at a pressure of from 205 kPa (15psig) to 13900 kPa (2000 psig).

2.  The process of claim 1, wherein said waxy feed contains at least 90% wax.

3.  The process of claim 1, wherein said waxy feed is selected from the group consisting of gas oil, lubricating oil stock, synthetic oil, foots oil, slack wax, deoiled wax, normal alphaolefin wax and microcrystalline wax.

4.  The process of claim 1, wherein said intermediate pore size zeolite is selected from the group consisting of ZSM-22 and ZSM-35.

5.  The process of claim 4 wherein said intermediate pore size zeolite further comprises a platinum hydrogenation component.

6.  The process of claim 1, wherein isomerization is carried out at a temperature of from 200°C to 475°C and a pressure of from 205 kPa (15 psig) to 13900 kPa (2000 psig).

7.  The process of claim 6, wherein said pressure is from 446 kPa 50 to 7000 kPa (1000 psig):

8.  The process of claim 6, wherein the temperature is from 250°C to 450°C and the pressure is from 793 kPa (100 psig) to 4240 kPa (600 psig).

9.  The process of claim 1, wherein the liquid hourly space velocity during isomerization is from 0.1 to 20.

10. The process of claim 9, wherein the liquid hourly space velocity during isomerization is from 0.1 to 5.

11. The process of claim 1, wherein isomerization is carried out in the presence of hydrogen.

12. The process of claim 1, further comprising hydrofinishing the isomerized lube oil.

13. The process of claim 1, wherein hydrofinishing is carried out at a temperature of from 190°C to 340°C and a pressure of from 2860 kPa (400 psig) to 20800 kPa (3000 psig)

14. The process of claim 13, wherein hydrofinishing is carried out in the presence of a metallic hydrogenation catalyst.

15. The process of claim 1, wherein said waxy feed has an organic nitrogen content of less than 50 ppmw.

16. The process of claim 14, wherein said organic nitrogen content is less than 10 ppmw.

17. The process of claim 1, wherein the waxy feed comprises $C_{20}+$ paraffins and boils above 230°C.

18. The process of claim 16, wherein the waxy feed boils above 315°C.

19. The process of claim 1, wherein said molecular sieve is a ZSM-22.

20. The process of claim 19, wherein said molecular sieve further comprises a platinum hydrogenation component.

21. The process of claim 1, wherein said catalyst contains a Group IIA metal.

**Patentansprüche**

1.  Verfahren zur Herstellung von Schmieröl, umfassend das Isomerisieren eines wachshaltigen Einsatzes mit mindestens 80% Wachs unter einem Druck von 205 kPa (15 psig) bis 13900 kPa (2000 psig) über einem Katalysator, umfassend einen Zeolithen mittlerer Porengröße, der in der Regel ovale eindimensionale Poren besitzt mit einer kleineren Achse zwischen 4,2 Å und 4,8 Å und einer größeren Achse zwischen 5,4 Å und 7,8 Å, und mindestens ein Metall der Gruppe VIII, ausgewählt aus Platin, Palladium und deren Gemischen.

**2.** Verfahren nach Anspruch 1, wobei der wachshaltige Einsatz mindestens 90% Wachs enthält.

**3.** Verfahren nach Anspruch 1, wobei der wachshaltige Einsatz ausgewählt ist aus der Gruppe Gasöl, Schmierölstock, synthetisches Öl, Footsöl, Slackwachs, entöltes Wachs, n-Alphaolefin-Wachse und mikrokristallines Wachse.

**4.** Verfahren nach Anspruch 1, wobei der Zeolith mittlerer Porengröße ausgewählt ist aus der Gruppe ZSM-22 und ZSM-35.

**5.** Verfahren nach Anspruch 4, wobei der Zeolith mittlerer Porengröße zudem eine Hydrogenierungskomponente mit Platin aufweist.

**6.** Verfahren nach Anspruch 1, wobei die Isomerisierung bei einer Temperatur von 200°C bis 475°C und unter einem Druck von 205 kPa (15psig) bis 13900 kPa (2000 psig) erfolgt.

**7.** Verfahren nach Anspruch 6, wobei der Druck 446 kPa (50 psig) bis 7000 kPa (1000 psig) ist.

**8.** Verfahren nach Anspruch 6, wobei die Temperatur 250°C bis 450 °C ist und der Druck 793 kPa (100 psig) bis 4240 kPa (600 psig).

**9.** Verfahren nach Anspruch 1, wobei die Flüssigkeitsraumstundengeschwindigkeit bei der Isomerisierung 0,1 bis 20 ist.

**10.** Verfahren nach Anspruch 9, wobei die Flüssigkeitsraumgeschwindigkeit bei der Isomerisierung 0,1 bis 5 ist.

**11.** Verfahren nach Anspruch 1, wobei die Isomerisierung in Gegenwart von Wasserstoff erfolgt.

**12.** Verfahren nach Anspruch 1, zudem umfassend ein Hydrofinishing des isomerisierten Schmieröls.

**13.** Verfahren nach Anspruch 1, wobei das Hydrofinishing erfolgt bei einer Temperatur von 190°C bis 240°C und unter einem Druck von 2860 kPa (400 psig) bis 20800 kPa (3000 psig).

**14.** Verfahren nach Anspruch 13, in Gegenwart eines metallischen Hydrogenierungskatalysators.

**15.** Verfahren nach Anspruch 1, wobei der wachshaltige Einsatz einen organischen Stickstoffgehalt von weniger als 50 ppmw hat.

**16.** Verfahren nach Anspruch 14, wobei der organische Stickstoffgehalt weniger als 10 ppmw ist.

**17.** Verfahren nach Anspruch 1, wobei der wachshaltige Einsatz $C_{20}$+-Paraffine enthält und über 230°C siedet.

**18.** Verfahren nach Anspruch 16, wobei der wachshaltige Einsatz bei über 315°C siedet.

**19.** Verfahren nach Anspruch 1, wobei das Molekularsieb ZSM-22 ist.

**20.** Verfahren nach Anspruch 19, wobei das Molekularsieb zudem eine Hydrogenierungskomponente mit Platin aufweist.

**21.** Verfahren nach Anspruch 1, wobei der Katalysator ein Metall der Gruppe IIA enthält.

**Revendications**

**1.** Procédé pour la production d'une huile lubrifiante, comprenant l'isomérisation d'une charge cireuse comprenant au moins 80 % de cire sur un catalyseur comprenant une zéolite ayant de manière générale des pores ovales 1-D ayant un petit axe de 4,2 Å à 4,8 Å et un grand axe de 5, 4 Å à 7,0 Å, et au moins un métal du Groupe VIII choisi entre le platine, le palladium et leurs mélanges, à une pression comprise dans l'intervalle de 205 kPa (15 psig) à 13 900 kPa (2000 psig).

2. Procédé suivant la revendication 1, dans lequel la charge cireuse contient au moins 90 % de cire.

3. Procédé suivant la revendication 1, dans lequel la charge cireuse est choisie dans le groupe consistant en un gasoil, une huile lubrifiante de base, une huile synthétique, une huile de ressuage, une paraffine huileuse, une cire déshuilée, une cire alpha-oléfinique normale et une cire microcristalline.

4. Procédé suivant la revendication 1, dans lequel ladite zéolite à diamètre intermédiaire des pores est choisie dans le groupe consistant en ZSM-22 et ZSM-35.

5. Procédé suivant la revendication 4, dans lequel ladite zéolite à diamètre intermédiaire des pores comprend en outre un constituant d'hydrogénation au platine.

6. Procédé suivant la revendication 1, dans lequel l'isomérisation est effectuée à une température comprise dans l'intervalle de 200°C à 475°C et une pression comprise dans l'intervalle de 205 kPa (15 psig) à 13 900 kPa (2000 psig).

7. Procédé suivant la revendication 6, dans lequel la pression est comprise dans l'intervalle de 446 kPa (50 psig) à 7000 kPa (1000 psig).

8. Procédé suivant la revendication 6, dans lequel la température est comprise dans l'intervalle de 250°C à 450°C et la pression est comprise dans l'intervalle de 793 kPa (100 psig) à 4240 kPa (600 psig).

9. Procédé suivant la revendication 1, dans lequel la vitesse spatiale horaire de liquide au cours de l'isomérisation est comprise dans l'intervalle de 0,1 à 20.

10. Procédé suivant la revendication 9, dans lequel la vitesse spatiale horaire de liquide au cours de l'isomérisation est comprise dans l'intervalle de 0,1 à 5.

11. Procédé suivant la revendication 1, dans lequel l'isomérisation est effectuée en présence d'hydrogène.

12. Procédé suivant la revendication 1, comprenant en outre l'hydrofinissage de l'huile lubrifiante isomérisée.

13. Procédé suivant la revendication 1, dans lequel l'hydrofinissage est effectué à une température comprise dans l'intervalle de 190°C à 340°C et une pression comprise dans l'intervalle de 2860 kPa (400 psig) à 20 800 kPa (3000 psig).

14. Procédé suivant la revendication 13, dans lequel l'hydrofinissage est effectué en présence d'un catalyseur métallique d'hydrogénation.

15. Procédé suivant la revendication 1, dans lequel la charge cireuse a une teneur en azote organique inférieure à 50 ppm en poids.

16. Procédé suivant la revendication 14, dans lequel la teneur en azote organique inférieure à 10 ppm en poids.

17. Procédé suivant la revendication 1, dans lequel la charge cireuse comprend des paraffines en $C_{20}$+ et bout à une température supérieure à 230°C.

18. Procédé suivant la revendication 16, dans lequel la charge cireuse bout à une température supérieure à 315°C.

19. Procédé suivant la revendication 1, dans lequel le tamis moléculaire consiste en une ZSM-22.

20. Procédé suivant la revendication 19, dans lequel le tamis moléculaire comprend en outre un constituant d'hydrogénation au platine.

21. Procédé suivant la revendication 1, dans lequel le catalyseur comprend un métal du Groupe IIA.

FIG. 1

FIG. 2

# *FIG. 3*